# EUROPEAN PATENT APPLICATION

(11) **EP 3 614 463 A1**
(43) Date of publication of application: **26.02.2020**
(21) Application number: 18189744.8
(22) Date of filing: 20.08.2018
(51) Int. Cl.: H01M 4/13, H01M 4/139, H01M 4/38, H01M 4/48, H01M 4/58, H01M 4/587, H01M 4/66, H01M 4/80, H01M 10/05

(54) **ELECTRODE STRUCTURE OF ELECTROCHEMICAL ENERGY STORAGE DEVICE AND MANUFACTURING METHOD THEREOF**

(71) Applicant: BGT Materials Limited, Manchester M13 9PL (GB)
(72) Inventor: SHEN, HSIAO-HSUAN, 814 KAOHSIUNG CITY (TW); CHANG, KUO-HSIN, 622 CHIAYI COUNTY (TW); LAI, CHUNG-PING, 302 HSINCHU COUNTY (TW)
(74) Representative: Cabinet Chaillot

(57) **Abstract**

The electrode structure includes a current collector, an electrode material and at least one through hole. The electrode material is coated on the current collector and is an electroactive material. The through hole penetrates through the electrode material and the current collector. The method includes: a) preparing a current collector; b) coating a surface of the current collector with an electrode material which is an electroactive material; and c) forming at least one through hole penetrating through the electrode material and the current collector.

## Description

### Technical Field

The invention relates to a structure of an electrochemical energy storage device, particularly to an electrode structure of an electrochemical energy storage device and manufacturing method thereof.

### Related Art

Recently, electrochemical energy storage devices (EESDs), such as lithium-ion batteries (LIBs), lithium-sulfur (Li-S) batteries and super capacitors (SCs), have been widely applied to electric vehicles (EVs), hybrid electric vehicles (HEVs), plug-in hybrid electric vehicles (PHEVs), wireless electrical tools, wireless power supplies and other electricity storage systems. EESDs have made significant progress by research and improvement in recent years, but their energy density, power density and service life are still hard to satisfy actual requirements. With rapid development of wearable electronic devices, a new EESD with compactness, lightweight and high energy density is urgently required.

A lithium-ion battery is composed of a positive electrode, a negative electrode, an electrolyte and an isolation film. Usually, the electrode includes two portions, an electrode material and a current collector. The two electrodes are the constituent components of a lithium-ion battery cell. In such a battery, lithium ions move from the negative electrode to the positive electrode during discharge and back when charging. The current collector is an elementary accessory for finishing a current loop. The electrolyte, which allows for ionic movement, significantly affects the performance of the battery system because it must have a wide electrochemical window, great chemical stability and high ion conductance.

The electrochemical reaction therein is a chemical change which occurs when electrons pass the metal-electrolyte interface. When the electrolyte is embedded into the electrode material, the power density of a lithium-ion battery will be electrochemically reduced. During this period, the coulombic efficiency attitudes simultaneously. In addition, increase of obstruction is usually accompanied by heat. According to the principle of electrochemical reaction, the interface between the electrodes and electrolyte needs to be enhanced to reduce undesired electrochemical reaction and to improve efficiency.

Energy density of a lithium-ion battery primarily depends upon its output voltage and specific capacity, and the magnitude of the voltage and specific capacity is decided by electrochemical performance. Electrode material has been developed in depth.

US patent publication No. 2004/0191632 provides a battery including carbon foam current collectors. The carbon foam current collector that has a network of pores can provide a large amount of surface area. Such an improvement will affect energy density, power density and service life of a lead-acid battery. This current collector includes a network of pores and a chemically active paste disposed on the carbon foam current collector such that the chemically active paste penetrates into the network of pores.

US patent publication No. 2013/0065122 provides a semi-solid electrode cell having a porous current collector and method of manufacture. Its porous current collector may form a metal mesh and may be made of any proper metal or non-metal material. The porous current collector enhances energy density and power density of an electrochemical battery.

US patent publication No. 2013/0252091 provides a lithium ion battery electrode which has an electro-conductive current collector with porous three-dimensional network construction. Such a current collector improves the electrode active material utilization and the electrode processability.

US patent publication No. 2011/0070489 provides a reticulated and controlled porosity battery structure which has a mesh component or a component with a mesh interface so as to increase the interface area. The added interface perimeter increases usable positions of ion matter reaction. The quantity of the reaction positions allows ion matter to diffuse to the surface. The electrolyte is solid and the ion matter is Li⁺.

US patent publication No. 2014/0186700 provides an advanced, high power and energy battery electrode manufactured by co-extrusion printing, which has a cathode material forming a pore channel. Such a pore channel promotes actions of sink or source of lithium ion movement. When lithium ions pass the pore channels from another material, the pore channels form shorter and straighter path channels. This allows to use a thicker electrode so that the cathode possesses high power and energy density in volume.

### Summary of the Invention

The technical problem which is solved by the invention is to provide an electrode structure of electrochemical energy storage device and manufacturing method thereof.

To solve the above technical problem, an embodiment of the electrode structure of electrochemical energy storage device of the invention includes: a current collector; an electrode material, coated on the current collector, and being an electroactive material; and at least one through hole penetrating through the electrode material and the current collector.

In a preferred embodiment, the invention includes multiple through holes.

The method for manufacturing an electrode structure of electrochemical energy storage device includes: a) preparing a current collector; b) coating a surface of the current collector with an electrode material which is an electroactive material; and c) forming at least one through hole penetrating through the electrode material and the current collector.

The current collector is made of a metal or non-metal material.

The electroactive material includes lithium or anyone of an alloy containing lithium, a graphite-like material, a metal oxide, a sulfide and a nitride.

Advantages of the invention includes:
1) decreasing weigh proportion of the current collector;
2) increasing fluid retention of the electrolyte to extend the cycle life;
3) enhancing adhesion between the electroactive material and the current collector;
4) raising flexibility of the current collector; and
5) improving the moving ability of ions of electrolyte in an electrochemical energy storage device in all directions, wherein increase of both moving efficiency of ions in electrolyte and selectable paths of moving ions can raise charging and discharging efficiency at different charging and discharging speed.

Also, by the through hole and the electrode material coated on the current collector, the reaction with electrolyte ions can be improved during high current density charging and discharging to obtain a high power density.

### Brief Description of the Drawings

FIG. 1 is a schematic view of the electrode structure of an electrochemical energy storage device of the invention;
FIG. 2 is a flowchart of the method for manufacturing the electrode structure of an electrochemical energy storage device;
FIG. 3 is a schematic view showing the application of the electrode structure of an electrochemical energy storage device of the invention; and
FIG. 4 is a schematic view showing another application of the electrode structure of an electrochemical energy storage device of the invention.

### Detailed Description of the Invention

The positional relationship in the following description, including top (upper), bottom (lower), left and right, is based on the directions in the drawings if no special indication.

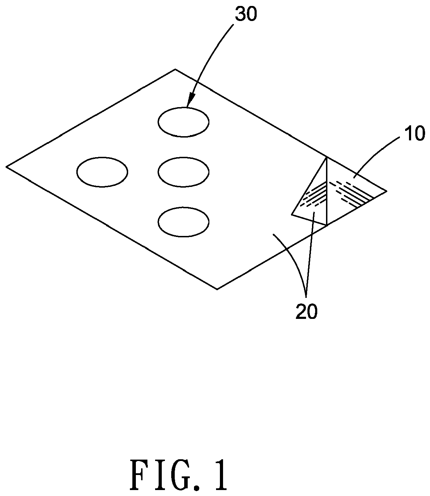

Please refer to FIG. 1, which is a schematic view of the electrode structure of an electrochemical energy storage device (EESD) of the invention. Basically, the electrode structure of the invention can serve as a cathode or anode of an electrochemical energy storage device. The electrode structure of the invention includes: a current collector 10, an electrode material 20 and at least one through hole 30. The electrode material 20 is being an electroactive material coated on the current collector 10 to serve as a charging and discharging circuit during an electrochemical reaction. The through hole 30 penetrates through the electrode material 20 and the current collector 30. In a preferred embodiment, the invention includes multiple through holes 30, which may be arranged in array. The through holes 30 is advantageous to moving ability of ions of electrolyte in an electrochemical energy storage device in all directions. As a result, this can raise charging and discharging efficiency at different charging and discharging speed.

The EESD may be applied to, for example, an electrochemical cell, an electrochemical capacitor, lithium-ion battery and lithium-ion capacitor. Furthermore, the electrode structure of the EESD of the invention is suitable for electric vehicles (EVs), hybrid electric vehicles (HEVs), plug-in hybrid electric vehicles (PHEVs), wireless electrical tools, wireless power supplies and other electricity storage system.

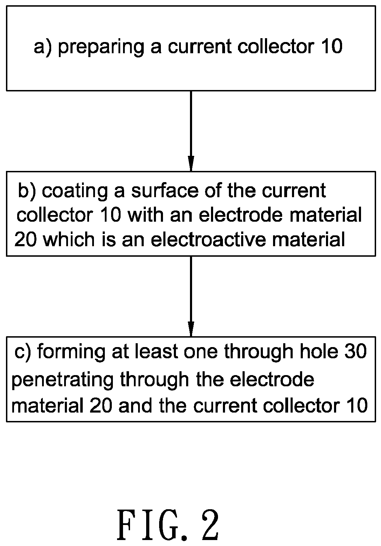

Please refer to FIG. 2, which is a flowchart of the method for manufacturing an electrode structure of an electrochemical energy storage device. The method includes the steps of: a) preparing a current collector 10; b) coating a surface of the current collector 10 with an electrode material 20 which is an electroactive material; and c) forming at least one through hole 30 penetrating through the electrode material 20 and the current collector 10.

A preferred embodiment of step b) is to prepare a pulp of the electrode material 20 first, then evenly daub the pulp onto the current collector 10, and finally form an even coating layer on the current collector 10 by a drying treatment. A preferred embodiment of step c) is to perform a punching process to form the through hole 30.

Another embodiment of the method of the invention is to form the through hole 30 in the current collector 10 first, and then coat the current collector 10 having the through hole 30 with the electrode material 20.

The current collector 10 is made of a metal or non-metal material and may be a foil or mesh. The electroactive material includes lithium or anyone of an alloy containing lithium, a graphite-like material, a metal oxide, a sulfide and a nitride. For example, an anode material of a lithium battery is LiMn₂O₄, LiFePO₄ or LiNiCoO₂, and its cathode material is usually a carbon material including graphite and coke. By the through hole 30 and the electrode material 20 coated on the current collector 10, the reaction with electrolyte ions can be improved during high current density charging and discharging to obtain a high power density.

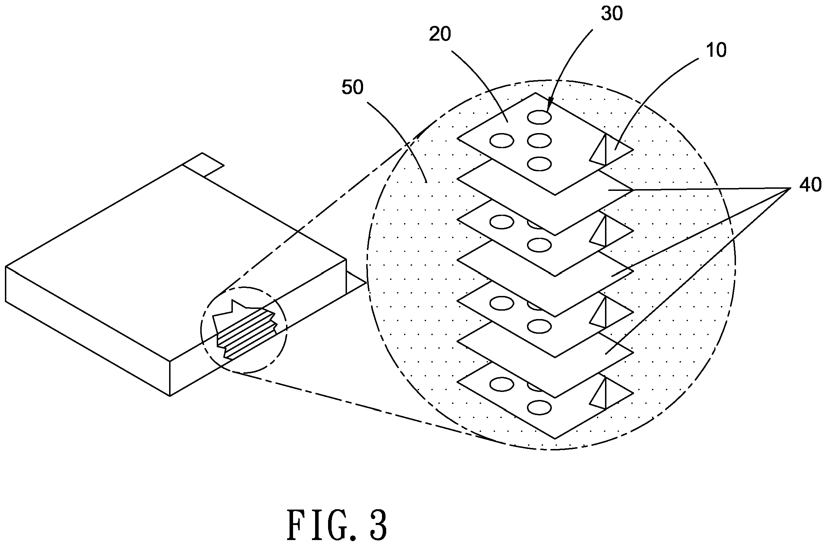

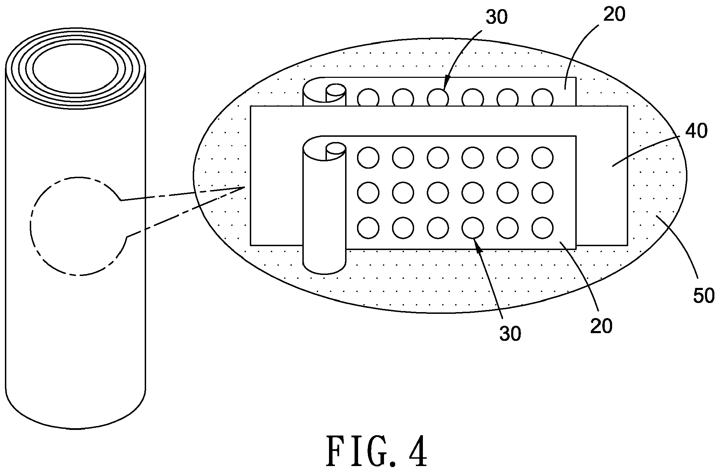

Please refer to FIG. 3, which is a schematic view showing the application of the electrode structure of an electrochemical energy storage device of the invention. As shown, the electrode structure of the invention is a laminative structure formed by a laminating process. An isolation film 40 is sandwiched between any two adjacent electrode structures, then put the multi-layered electrode structure in electrolyte liquid 50, and finally package them to form a soft pack or hard pack such as a lithium-ion battery or a lithium-ion capacitor. Similarly, the electrode structure of the EESD of the invention may also be applied to a cylindrically-packaged lithium-ion battery as shown in FIG. 4.

By the arrangement of the through hole 30, the invention has advantages as follows:
1) decrease weigh proportion of the current collector 10;
2) increase fluid retention of the electrolyte to extend the cycle life;
3) enhance adhesion between the electroactive material and the current collector 10;
4) raise flexibility of the current collector 10; and
5) improve the moving ability of ions of electrolyte in an electrochemical energy storage device in all directions, wherein increase of both moving efficiency of ions in electrolyte and selectable paths of moving ions can raise charging and discharging efficiency at different charging and discharging speed. Also, by the through hole 30 and the electrode material 20 coated on the current collector 10, the reaction with electrolyte ions can be improved during high current density charging and discharging to obtain a high power density.

Those skilled in the art will appreciate that numerous changes and modifications can be made to the preferred embodiments of the invention, and that such changes and modifications can be made without departing from the spirit of the invention.

## Claims

1. An electrode structure of an electrochemical energy storage device, comprising:
a current collector;
an electrode material, coated on the current collector, and being an electroactive material; and
at least one through hole penetrating through the electrode material and the current collector.

2. The electrode structure of claim 1, further comprising multiple through holes arranged in array.

3. The electrode structure of claim 1, wherein the current collector is made of a metal or non-metal material.

4. The electrode structure of claim 1, wherein the electroactive material comprises lithium or anyone of an alloy containing lithium, a graphite-like material, a metal oxide, a sulfide and a nitride.

5. A method for manufacturing an electrode structure of an electrochemical energy storage device, comprising steps of:
a) preparing a current collector;
b) coating a surface of the current collector with an electrode material which is an electroactive material; and
c) forming at least one through hole penetrating through the electrode material and the current collector.

6. The method of claim 5, further comprising multiple through holes arranged in array.

7. The method of claim 5, wherein the through hole is formed by a punching process.

8. The method of claim 6, wherein the through hole is formed by a punching process.

9. The method of claim 5, wherein the current collector is made of a metal or non-metal material.

10. The method of claim 5, wherein the electroactive material comprises lithium or anyone of an alloy containing lithium, a graphite-like material, a metal oxide, a sulfide and a nitride.
